# EUROPEAN PATENT SPECIFICATION

(11) **EP 1 783 406 B1**
(45) Date of publication and mention of the grant of the patent: **21.07.2010**
(21) Application number: 07075084.9
(22) Date of filing: 05.04.2001
(51) Int. Cl.: F16J 15/32, F16J 15/447, F16J 15/44

(54) **Improved brush-seal designs for turbines and similar rotary apparatus**
Verbesserte Bürstendichtungsentwürfe für Turbinen und ähnliche Rotationsgeräte
Modèles de joint à brosse améliorés pour des turbines et appareil rotatif similaire

(30) Priority: 06.04.2000 US 543951
(43) Date of publication of application: 09.05.2007
(62) Divisional of application: 01924806.1
(73) Proprietor: TurboCare, Inc., Lawrenceville, NJ 08648-2302 (US)
(72) Inventor: Dalton, William S. c/o Turbocare Div.Demag Delaval, Chicopee, MA 01022-1057 (US); Sulda, Eric c/o Turbocare Div.Demag Delaval, Chicopee, MA 01022-1057 (US); Dalton, Patrick.S c/o Turbocare Div.Demag Delaval, Chicopee, MA 01022-1057 (US); Catlow, William G. c/o Turbocare Div.Demag Delaval, Chicopee, MA 01022-1057 (US)
(74) Representative: Burke, Steven David

(56) References cited:
- EP-A- 0 816 726
- EP-A- 0 911 554
- EP-A- 0 989 342

## Description

### BACKGROUND OF INVENTION

### 1. Field of Invention

The present invention relates generally to improved brush seal designs for use in turbines such as steam and gas turbines and other apparatus that extracts work from the expansion of a working fluid, and in particular to a retractable assembly of packing segments having at least one brush seal.

### 2. Brief Description Of The Prior Art

The use of axial flow elastic fluid turbines, such as axial flow steam turbines, plays a very important role in the production of electric power in our society. Often, in a typical power plant, there will be a number of steam turbines each driving one or more electrical power generators.

In general, each steam turbine comprises a rotatable shaft supported by bearings which are encased in a housing or casing. In order to rotate the rotor shaft using the momentum of superheated vapor (superheated steam for a steam turbine and hydrocarbon combustion gases for a "gas" turbine), a series of turbine stages are sequentially arranged along the axis of the shaft. A boiler, typically located external to the turbine casing, is provided for the purpose of generating steam for powering the turbine. External to the turbine casing are steam pipes which are used to conduct the steam from the boiler to the turbine. Turbines are typically classified by the pressure or pressure range at which the operate. Attached to the end of the turbine casing is a narrowing casing called a shroud. At the end of the shroud is a pipe (the snout pipe) that joins to the pipe from the boiler; sealing of the snout pipe to the steam supply pipe is effected by sealing rings called snout rings; the snout rings comprise two sets of rings that intermesh, one set disposed on the outside of the snout pipe and the other on the inside of the steam pipe into which the snout pipe leads. An example of this type of expansion joint is shown by Miller in US 2,863,632 (the disclosure of which is incorporated herein by reference).

Each pressure stage of the turbine has a turbine rotor. Each rotor has a plurality of blades which radially extend a predetermined distance from the shaft, towards a circumferentially extending shroud band (*i.e*., cover) that is secured to the tenon portions of the blades. A stationary diaphragm is installed behind each rotor in a circumferential joint formed in the turbine casing. The inner structure of the diaphragm defines a ring of steam nozzles disposed circumferentially around the rotor. These nozzles are located at the same radial position as the blades in its associated rotor. The nozzles channel the steam (or other working fluid) entering that stage and channel it to the blades. To establish a "tip seal" with the shroud band of each turbine rotor, a ring of spillstrips segments are supported from the stationary diaphragm in each stage with packing that extends to the rotating shroud band (the band being attached to the blades, which are fixed to the rotor, which is rotating). As the steam travels through the turbine, a portion of its linear momentum is transformed into the angular momentum of the rotor blades at each turbine stage, thereby imparting torque to the turbine shaft. At downstream stages it is often necessary to increase the length of the rotor blades and the size of the associated diaphragms in order to extract kinetic energy from working fluid at a reduced pressure.

A major problem in turbine design relates to the quality of steam seals between the various stationary and rotating components along the steam flow path in the turbine. In general, there are several locations within the turbine where such seals must be established to ensure high turbine efficiency.

A first location where steam seals are required is between the outer portion of each rotor and its associated diaphragm have been effected using a segmented spillstrip ring of the type disclosed in U.S. Patent No. 5,547,340, incorporated herein by reference. During start-up operations, when the rotor exhibits low frequency modes of operation about its axis, the tips of the rigid fin-like structure (e.g., fin seals) projecting along the spillstrip segments tend to rub against and/or cut into the shroud-band of the associated rotor, causing damage thereto during the start-up process. The only safeguards offered against such rubbing action has been to design the spillstrips so sufficient clearance exists between the tip portions of the fins on the spillstrips and the shroud band of the rotor. This approach, however, results in degradation of the tip seal, allowing steam to pass through the clearance area and not through and over the blades of the rotor, thereby reducing the performance of the turbine.

A second location where steam seals are required is between the rotor and the turbine shaft. Creating seals over such regions has been addressed generally over the years by installing a segmented packing between the rotor and the turbine shaft at each turbine stage. The packing typically consists of a first ring structure with multiple rows of fins (*i.e.,* seal teeth) on one of the parts and a second structure with multiple rows of surface projections that correspond to the fins. The first ring structure typically is mounted from the associated diaphragm and the second ring structure typically is mounted to the turbine shaft. Together, the corresponding and registered rows of fins and projection structures create a labyrinth-type seal which presents a high impedance flow path to pressurized steam. However, during start up operation, low frequency modes of operation about the turbine axis tends to cause the tip portions of each row of fins to move radially outwardly and inwardly; in addition, differential thermal expansion caused as the hot working fluid is admitted to the stages and each heats up to operating temperature can exacerbate damage to the packing. To avoid rubbing and damage to such packing ring structures, it is necessary to design the fins and surface projections with sufficient clearance to avoid tip rubbing during start-up operation. This, however, necessarily degrades the quality of the labyrinth seal.

In U.S. Patent Nos. 4,436,311 and 5,395,124 to Brandon (the disclosures of which are incorporated herein by reference), the problem of fin tip rubbing in packing ring design has been addressed by providing a retractable segmented packing ring structure between each rotor and turbine shaft. The manner in which the quality of the labyrinth seal is improved with this design is described as follows. During startup operation, when low frequency rotor vibration is predominant, the diaphragm-mounted packing ring segments are spring-biased in a radial direction away from the turbine shaft, reducing the risk of fin-tip portion rubbing and packing ring damage. As the rotor increases its angular speed, low frequency vibration is naturally reduced. The ring segments of the packing are forced to move closer (radially inward) to the turbine shaft by steam pressure, improving the quality of the labyrinth seal between the fins and the opposing corresponding surface projections, thereby improving the efficiency of the turbine.

An alternative solution to the problem of fin tip rubbing in packing is disclosed in UK Patent Application Publication No. GB 2 301 635 A. In this UK Patent Publication, a brush-type element is installed between a pair of fins extending from the packing ring segments mounted on the diaphragm. The function of the brush seal is to improve the quality of the labyrinth seal during all phases of operation. A major shortcoming with this design, however, is that during startup operations it does not provide a way of protecting the tips portions of the fin seals without designing a high degree of clearance into the design. Consequently, by virtue of such increased clearance requirements, the quality of the labyrinth seal provided by this prior art packing seal design is necessarily compromised.

Various other patents describe the use of brush seals in turbines, such as Ferguson in US 4,971,336, Sanders et al. in US 5,599,026, Bagepalli et al. in US 5,474,306, and Skinner et al. in US 5,749,584 (the disclosures of which are incorporated herein by reference). In these designs, the brush seals are designed be fixed and immovable. Many of the more recent brush seal designs provide the brushes canted at an angle from the radius of the turbine (the center being defined by the rotating turbine shaft). As Skinner *et al.* teach, existing machines with retractable seals (*e.g.*, as described by Brandon) can be retrofit with a brush seal substituted for one of the labyrinth teeth, but when used with retractable packing Skinner *et al.* teach that the ends of each brush seal disposed in a retractable packing segment must be cut along the radius provide each of the segment with a flush surface for proper mating when the seals engage each other to form the ring structure. Due to the cant of the brushes relative to the flat end of the brush seal disposed along the radius, the Skinner *et al* design includes a small gap in the brush seal.

EP-A-0 911 554 describes retractable labyrinth seal ring segments provided with a brush seal formed by bristles canted at a 45° angle. As a result, a blank triangular area appears at the end of each segment, creating a gap as in the Skinner *et al* design.

### SUMMARY OF THE INVENTION

The invention provides an assembly of retractable packing segments for an apparatus that extracts work from the expansion of a gaseous working fluid, said apparatus comprising a rotatable shaft disposed in a casing, in use, said retractable assembly of packing segments being arranged in a ring centred on an axis defined by said shaft to provide a seal therearound, each retractable packing segment having: an inner face for sealing against said shaft; an outer face supporting a T-shaped extension; said inner and outer faces and said extension spanning opposing common side ends cut parallel with radii of said axis; and at least one brush seal disposed on the inner face, said at least one brush seal having opposing ends, at least one of said ends being cut non-parallel with radii of said axis;
characterised in that:
each of said packet segments has an associated spring or similar means by which adjacent said segments are biased away from each other in the circumferential direction of said ring; and
an end of said brush seal of a respective packing segment which is cut non-parallel with radii of said axis extends past one of said common side ends and engages with an end of a brush seal of an adjacent packing segment.

EP-A- 0 989 342 discloses a hybrid packing segment for an apparatus that extracts work from the expansion of a working gas. The segment includes a plurality of fins and a brush seal for sealing against a rotatable shaft of the apparatus. In use, a plurality of said segments are fixed in end-to-end relationship to provide a fixed non-retractable ring seal centred on an axis defined by the shaft. The brush seal has both ends cut non-parallel with radii of said axis. The outer face of each packing element supports a T-shaped extension by which the packing segment is non-retractably fixed to the apparatus.

### BRIEF DESCRIPTION OF THE DRAWINGS

In order that the invention may be well understood, some embodiments thereof, which are given by way of example only, will now be described with reference to the drawings, in which:
Fig. 1 is a cross-sectional view of a conventional turbine stage including an embodiment of a retractable assembly of packing segments according to the invention;
Figs. 2A and 2B are perspective views of opposite ends of a packing segment.
Fig. 3 is a side view showing adjacent packing segments separated from each other.
Fig. 4 is a perspective view of a notch in the side of a packing segment to allow steam to enter behind the packing during start-up and shut down.

### DETAILED DESCRIPTION OF PREFERRED EMBODIMENTS

The reader is first referred to the above-mentioned patents in the Background section for specifics and details regarding labyrinth seals and retractable packing segments. As noted in the Background section, the steam (exemplified in this section as the working fluid) is channeled in each stage by a nozzle in the diaphragm to the blades, the diaphragm being attached to the non-moving casing and the blades being attached to the rotating shaft of the turbine.

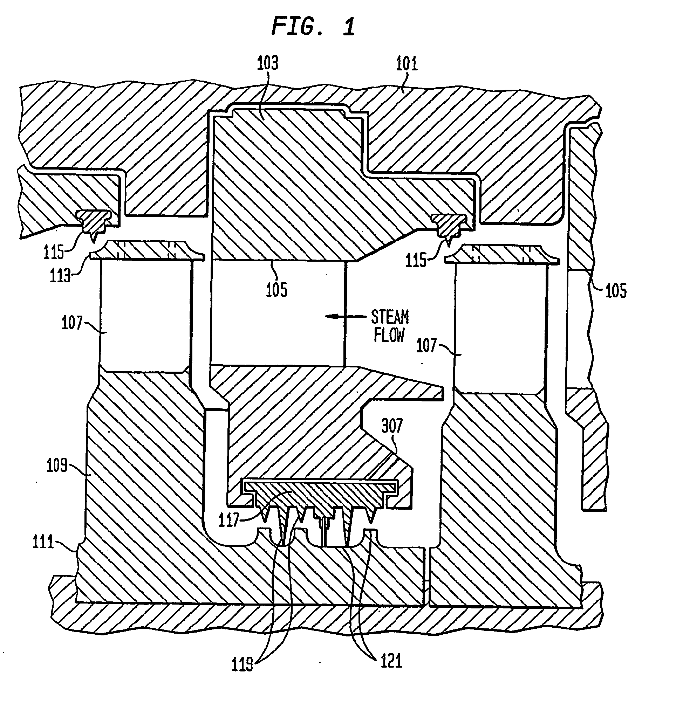

As shown in Fig. 1, a cross-section through a turbine reveals the casing **101** in which is mounted a diaphragm **103** separating adjacent stages. Steam flow from the previous stage is channeled through the nozzle (a shaped opening) **105** in the diaphragm to impinge on the turbine blades **107.** Each blade is attached by a root **109** to the turbine shaft **111.** The circumference at the end of the blades is capped by a circumferential shroud **113.** Steam is prevented from by-passing the blade and going over the shroud by a tip seal **115;** the steam does not flow backward between the tip seal and the shroud because it cannot flow from a lower pressure area to a higher pressure area (areas to the left in Fig. 1 being of lower pressure than those to the right). A corresponding tip seal **115** is present on the next downstream stage of blades. While steam cannot avoid the nozzle by escaping back through seal **115** (*i.e.,* to the right in the Figure), it can leak between the diaphragm and the shaft. Accordingly, this is another location where packing is used. In review, steam from a previous stage impinges on the blade and is directed to the next stage, a nozzle in the diaphragm directed at the next set of blades. The steam entering the stage must be prevented from escaping around the diaphragm with the nozzle; it is prevented from going back upstream due to higher pressures, from going around the shaft by the packing **117** adjacent the shaft, and from bypassing the blade by the tip seal **115.**

The packing between the diaphragm and the shaft is retractable and is preferably of the labyrinth type. The packing **117** is disposed in the diaphragm and it includes a series of fins **119** the ends of which lie adjacent corresponding lands **121** of the shaft, some of which are raised, all providing the proper clearance and a tortious (labyrinthine) path of high resistance, and hence a seal. The packing can be biased towards the shaft with a spring. The packing is in the geometry of a ring and is provided as a plurality of segments, typically six being used in a high pressure application. By virtue of this packing, the steam exiting from the previous stage's blades is channeled through the nozzle and does not escape around the diaphragm. It should be appreciated that a labyrinth seal need not have solid fins in order to provide a labyrinth. For example, one or more of the fins can be replace by a brush seal, or the entire inner surface where the fins are disposed can be a brush. In both of these cases, a tortious flow path is established, hence a labyrinth seal is formed.

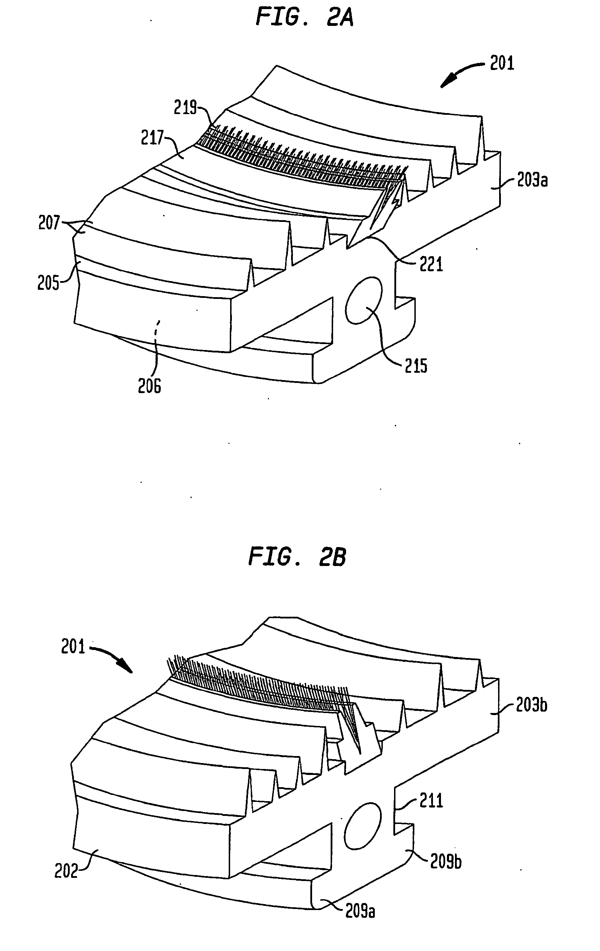

The retractable packing segments are arcuate. Perspective views of opposite ends of a segment are shown in Figs. 2A and 2B. Each segment **201** has a main body **202** with ends **203a** and **203b** that are preferably parallel with the axial radius of the turbine (*i.e.,* the radius of the turbine in a cross-section when viewed axially along the shaft), although they need not be. The radially inner surface **205** of the segment *(i.e.,* the side facing the shaft) is provided with a plurality of fins **207** that can be of the same or of different heights from the inner surface. The radially outer surface **206** has a T-shaped extension defining opposing shoulders **209a/209b** that engage a correspondingly shaped groove in the diaphragm as shown in Fig. 1. The neck **211** portion connecting the radially outer surface of the packing segment to the shoulders receives a corresponding projection from the diaphragm. The neck at each end of the segment preferably is provided with a bore **215.** A spring (or similar means) is received in each of the bores in adjacent/abutting segments; the springs bias the segments away from each other. As noted above, it is preferred that these segments include means for allowing steam behind the seal, as will be discussed below; as the turbine reaches operating pressure, the pressure forces the necks of the segments to abut the corresponding projection in the diaphragm and to form a seal so that the steam must pass through the nozzle or attempt to traverse the labyrinth seal.

In the embodiment shown in Figs. 2A and 2B, a center section of the segment where a fin could be provided has been replaced by a brush seal. The seal generally comprises a holder **217** in which are disposed a multiplicity of bristles **219.** As shown, and as described in the art, the bristles are preferably canted (angled) with respect to the (axial) radius of the turbine. We have discovered that the alleged problem identified by Skinner *et al.,* that the ends of the brush seals, like the packing segment ends, must be disposed along the radius of the turbine, is not a limitation. As shown in Figs. 2A and 2B, at one end of the segment the brush seal is cut at an angle that extends past the end of the segment (*e.g.*, Fig. 2A) and the other end of the brush seal at the opposite end of that segment is cut at an angle that extends over the segment (*e.g.*, Fig. 2B). Thus, the ends of the brush seal are not disposed along the radius of the turbine. It is preferred that the end of the brush seal is cut so that the bottom (or outer) face **221** of the holder is essentially coincidental with the junction between the inner face **205** and the segment end **203a/b.**

This invention provides a significant advantage over the system described by Skinner *et al*. because the present brush seal does not have areas where bristles are not present. In this industry, the seal formed by a brush seal typically is determined with respect to a theoretical fin in a labyrinth seal, Because a brush seal is not solid, some flow occurs through it, even when the brush is in line contact with the shaft. A pressure test is done to determine the leakage of a brush seal in line contact. This leakage value is then used to back-calculate the clearance between a theoretical fin in a labyrinth seal; that is, given the pressure drop in the test, the area between the end of the fin and the shaft is back-calculated (the fin is solid so no working fluid flows though it) to provide an effective leakage area for the brush seal. If one were to assume the same effective leakage area for the brush seal *per se* described by Skinner *et al.* and those of the present invention, adding the spaces formed by the missing bristles in the Skinner *et al.* seal results in a leakage area in Skinner *et al.'*s seal significantly greater than for the present seal. The leakage area is related to the diameter of the seal. Using a 36" (approximately 915 mm) diameter brush seal, the Skinner *et al.* brush seal has a 47% greater leakage than the present brush seal, and with a 10" (approximately 254 mm) diameter brush seal the present seal has 264% less leakage.

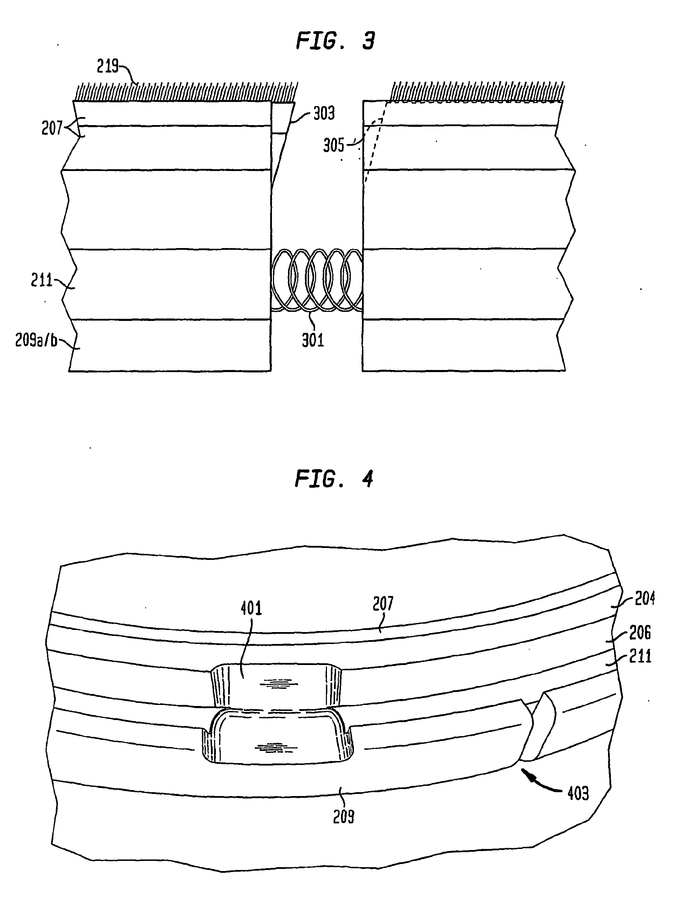

In transient operation during start-up, the segments are retracted and biased radially outward; this allows the shaft to rotate slowly with some wobble or vibration without the projections **121** on the shaft impacting and damaging the fins on the packing. As the steam pressure increases and the turbine comes up to operating speed and temperature, the packing contracts around the shaft. As shown in Fig. 3, adjacent packing segments are separated and are urged apart by a spring **301** (a coiled spring being shown in the figure). At the end of one brush seal, the seal is cut at an angle extending past the end of the segment to provide a sort of tongue 303. The corresponding end of the adjacent segment is provided with the brush seal cut at an angle extending over the surface of the segment to provide a groove 305. As the segments come together to form a ring, the opposing ends of the adjacent segments meet and become flush, and the tongue portion of the brush seal segment from one packing segment engages with the groove in the adjacent abutting segment. Thus, this invention avoids the problem inherent in the Skinner *et al.* device wherein a small hole or space exists in the brush seal at each joint between packing segments. Additionally, the brush seal (or one of plural brush seals) can be provided as a floating brush seal.

Further regarding transient operation, as noted above during start-up there are often issues with thermal gradients and mismatched expansion and alignment as well as vibration problems. To avoid damage to the packing, it is desirable effectively to disengage the packing from the shaft. Accordingly, retractable-contractible packing as described by Brandon in US 4,436,311 (the disclosure of which is incorporated herein by reference) is preferred; in essence, this packing is radially-movable and self-adjusting. This packing comprises a ring of packing segments each separated from those adjacent by a spring, which urges the ring to a larger circumference and hence away from the turbine shaft; the bottom segments in the ring naturally move away from the shaft due to gravity. In order to force the segments towards the shaft, the working fluid (steam) is provided access to the upstream radially outer surface of the segment; such access can be provided as a hole 307 in the wall of the diaphragm as shown in Fig. 1, so that the steam is freely admitted behind the packing. Alternatively, or additionally, as shown in Fig. 4, a groove or channel 401 or other conduit means can be provided in the radially outer surface 206, the neck 211, and one of the shoulders 209 of the segment effective to allow the working fluid to enter behind the outer surface and to force the segment towards the shaft. The shoulder portion of the T-shaped extension on the outer surface of the segment shown in Fig. 4 also can be provided with a groove or slit 403 perpendicular to the arc circumference of the segment for receiving a (leaf) spring or registration for further biasing and/or aligning the segment. In operation, when the turbine is down and steam is admitted to bring the turbine up to speed, the springs in the ends of the segments urge the ring of segments to a larger diameter and thus away from the shaft. As so biased, there will be spaces between the segments, and those spaces and/or the aforementioned channel allow steam behind the segment associated with a particular diaphragm, as the steam pressure increases, forcing the ring diameter smaller to seal about the shaft.

It will be appreciated that the embodiments of a retractable assembly of packing segments provide an improved brush-seal design for use in creating high seals in turbines while avoiding the shortcomings and drawbacks of prior art brush-seal designs.

It will be appreciated that the embodiments of a retractable assembly of packing segments provide such a brush-seal design which effectively reduces turbine part wear while providing an improved seals between each stage of the turbine by accommodating for transient radial deflections of the turbine rotor and shaft during so operation.

It will be appreciated that the embodiments of a retractable assembly of packing segments provide an improved segmented packing ring for use in an elastic turbine, wherein an improved seal is provided between the packing ring holder and rotor thereof.

It will be appreciated that the embodiments of a retractable assembly of packing segments provide an improved retractable packing for use in an elastic turbine, wherein an improved seal is formed between the retractable packing and the turbine rotor by way of fins and at least one row of bristle elements (*i.e*., a brush seal) disposed therebetween.

It will be appreciated that the embodiments of a retractable assembly of packing segments provide a retractable brush seal packing that provides a continuous brush seal without gaps as shown in prior art with brush seals on the retractable packing.

The foregoing description is meant to be illustrative and not limiting. Various changes, modifications, and additions may become apparent to the skilled artisan upon a perusal of this specification, the invention being limited only by the claims.

## Claims

1. An assembly of retractable packing segments (20) for an apparatus that extracts work from the expansion of a gaseous working fluid, said apparatus comprising a rotatable shaft (111) disposed in a casing (101), in use, said retractable assembly of packing segments being arranged in a ring centred on an axis defined by said shaft to provide a seal therearound, each retractable packing segment having: an inner face (205) for sealing against said shaft; an outer face (206) supporting a T-shaped extension (209,211); said inner and outer faces (205, 206) and said extension (209, 211) spanning opposing common side ends (203a, 203b) cut parallel with radii of said axis; and at least one brush seal (219) disposed on the inner face, said at least one brush seal having opposing ends, at least one of said ends being cut non-parallel with radii of said axis;
**characterised in that**:
each of said packing segments has an associated spring or similar means (301) by which adjacent said segments are biased away from each other in the circumferential direction of said ring; and
an end of said brush seal of a respective packing segment which is cut non-parallel with radii of said axis extends past one of said common side ends (203a, 203b) and engages with an end of a brush seal of an adjacent packing segment.

2. An assembly as claimed in claim 1, wherein both ends of said at least one brush seal are cut non-parallel with radii of said axis.

3. An assembly as claimed in claim 2, one of said ends (303) being cut angled to form a tongue extending past the segment end and the other of said ends (305) being cut at the same angle relative to said segment to provide a groove for accepting a tongue formed by a brush seal on another said packing segment.

4. An assembly as claimed in claim 2 or 3, wherein said at least one brush seal comprises bristles (219) disposed in a holder (217), the said ends of the brush seal being arranged such that respective ends of a bottom face (221) of the holder, which in use is the radially outermost face thereof, substantially coincide with the junction between said inner face (205) and segment ends (203a, 203b).

5. An assembly as claimed in any one of the preceding claims, comprising a plurality of said brush seals.

6. An assembly as claimed in any one of the preceding claims, wherein said inner face includes a plurality of fins (119).

7. An assembly as claimed in claim 6, wherein said fins extend different distances from said inner face.

8. An apparatus that extracts work from expansion of a gaseous working fluid, said apparatus comprising a rotatable shaft (111) and a seal carried by a casing (101), said seal comprising an assembly of retractable packing segments (201) as claimed in any one of the preceding claims arranged in a ring centred on an axis defined by said shaft.

9. An apparatus as claimed in claim 8, wherein said T-shaped extensions are received in a correspondingly shaped groove in a diaphragm (103) carried by said casing (101) and said diaphragm is provided with a hole (307) and/or said segments are provided with conduit means (401) arranged to allow the working fluid to enter said groove to force the segments towards the shaft.

## Patentansprüche

1. Anordnung zurückziehbarer Dichtsegmente (20) für eine Vorrichtung, die Arbeit aus dem Ausdehnen eines gasförmigen Arbeitsfluid extrahiert, wobei die Vorrichtung eine drehbare Welle (111) aufweist, die in einem Gehäuse (101) angeordnet ist, wobei die zurückziehbare Anordnung von Dichtsegmenten beim Gebrauch in einem Ring angeordnet ist, der auf einer Achse zentriert ist, die von der Welle definiert ist, um eine Abdichtung darum bereitzustellen, wobei jedes zurückziehbare Dichtsegmente Folgendes hat: eine Innenfläche (205) zum Abdichten gegen die Welle, eine Außenfläche (206) zum Tragen einer T-förmigen Erweiterung (209, 211), wobei die innere und die äußere Fläche (205, 206) und die Erweiterung (209, 211) gemeinsame entgegen gesetzte Seitenenden (203a, 203b) überspannen, die mit den Radien der Achse parallel geschnitten sind, und mindestens eine Bürstendichtung (219), die auf der Innenseite angeordnet ist, wobei die mindestens eine Bürstendichtung entgegen gesetzte Enden hat, wobei mindestens eines der Enden mit den Radien der Achse nicht parallel geschnitten ist,
**dadurch gekennzeichnet,**
**dass** jedes der Dichtsegmente eine Feder oder ein ähnliches Mittel (301) hat, durch welches die Segmente von einander in Umfangsrichtung des Rings weg gespannt werden, und
sich ein Ende der Bürstendichtung eines jeweiligen Dichtsegments, das zu den Radien der Achse nicht parallel geschnitten ist, über eines der gemeinsamen Seitenenden (203a, 203b) erstreckt und mit einem Ende einer Bürstendichtung eines angrenzenden Dichtsegments in Eingriff gebracht wird.

2. Anordnung nach Anspruch 1, wobei beide Enden der mindestens einen Bürstendichtung nicht parallel zu den Radien der Achse geschnitten sind.

3. Anordnung nach Anspruch 2, wobei eines der Enden (303) abgewinkelt geschnitten ist, um eine Zunge zu bilden, die sich über das Segmentende hinaus erstreckt, und wobei das andere der Enden (305) mit dem gleichen Winkel zu dem Segment geschnitten ist, um eine Hohlkehle zum Aufnehmen einer Zunge bereitzustellen, die von einer Bürstendichtung auf einem anderen Dichtsegment gebildet wird.

4. Anordnung nach Anspruch 2 oder 3, wobei die mindestens eine Bürstendichtung Borsten (219) aufweist, die in einem Halter (217) angeordnet sind, wobei die Enden der Bürstendichtung angeordnet sind, so dass die jeweiligen Enden einer Unterseite (221) des Halters, die beim Gebrauch die radial äußerste Seite ist, im Wesentlichen mit der Verbindung zwischen der Innenseite (205) und den Segmentenden (203a, 203b) zusammenfallen.

5. Anordnung nach einem der vorhergehenden Ansprüche, die eine Vielzahl der Bürstendichtungen aufweist.

6. Anordnung nach einem der vorhergehenden Ansprüche, wobei die Innenseite mehrere Rippen (119) aufweist.

7. Anordnung nach Anspruch 6, wobei sich die Rippen über unterschiedliche Entfernung von der Innenseite erstrecken.

8. Vorrichtung, die Arbeit aus dem Ausdehnen eines gasförmigen Arbeitsfluids extrahiert, wobei die Vorrichtung eine drehbare Welle (111) und eine Dichtung, die von einem Gehäuse (101) getragen wird, aufweist, wobei die Dichtung einen Anordnung zurückziehbarer Dichtsegmente (201) gemäß einem der vorhergehenden Ansprüche aufweist, die in einem Ring um eine Achse, die von der Welle definiert wird, zentriert angeordnet sind.

9. Vorrichtung nach Anspruch 8, wobei T-förmige Erweiterungen in einher entsprechend geformten Hohlkehle in einer Membran (103) aufgenommen sind, die von dem Gehäuse (101) getragen wird, wobei die Membran mit einer Öffnung (307) versehen ist, und/oder wobei die Segmente mit Leitungsmitteln (401) versehen sind, die eingerichtet sind, um es dem Arbeitsfluid zu ermöglichen, in die Hohlkehle einzutreten, um die Segmente zu der Welle zu zwingen.

## Revendications

1. Ensemble de segments de garniture rétractable (20) destiné à un appareil qui extrait de l'énergie à partir de l'expansion d'un fluide de travail gazeux, ledit appareil comprenant un arbre de rotation (111) disposé dans un boîtier (101), en fonctionnement, ledit ensemble rétractable de segments de garniture étant agencé dans un anneau centré sur un axe défini par ledit arbre afin de fournir autour de lui un joint étanche, chaque segment de garniture rétractable comportant : une face interne (205) destinée à former une étanchéité contre ledit arbre ; une face extérieure (206) supportant une extension configurée en T (209, 211) ; lesdites faces intérieure et extérieure (205, 206) et ladite extension (209, 211) s'étendant entre des extrémités latérales communes opposées (203a, 203b) coupées parallèlement aux rayons dudit axe ; et au moins un joint à brosse (219) disposé sur la face intérieure, ledit, au moins un, joint à brosse, ayant des extrémités opposées, au moins l'une desdites extrémités étant coupée non parallèlement aux rayons dudit axe ; **caractérisé en ce que** :
chacun desdits segments de garniture comporte un ressort associé ou des moyens similaires (301) à l'aide desquels lesdits segments adjacents sont rappelés à l'écart l'un de l'autre dans la direction circonférentielle dudit ressort ; et
une extrémité dudit joint à brosse d'un segment de garniture respectif qui est coupé de façon non parallèle aux rayons dudit axe s'étend au-delà de l'une desdites extrémités latérales communes (203a, 203b) et s'engage avec une extrémité d'un joint à brosse d'un segment de garniture adjacent.

2. Ensemble selon la revendication 1, dans lequel les deux extrémités dudit, au moins un, joint à brosse sont coupées de façon non parallèle aux rayons dudit axe.

3. Ensemble selon la revendication 2, l'une desdites extrémités (303) étant coupée de façon inclinée afin de former une languette s'étendant au-delà de l'extrémité du segment et l'autre desdites extrémités (305) étant coupée suivant le même angle par rapport au dit segment afin de fournir une gorge destinée à recevoir une languette formée par un joint à brosse situé sur un autre dit segment de garniture.

4. Ensemble selon la revendication 2 ou 3, dans lequel ledit, au moins un, joint à brosse, comporte des crins (219) disposés dans un support (217), lesdites extrémités du joint à brosse étant agencées de telle sorte que des extrémités respectives d'une face inférieure (221) du support, qui en fonctionnement est la face de celui-ci la plus radialement située à l'extérieur, coïncidant essentiellement avec la jonction entre la face intérieure (205) et les extrémités de segment (203a, 203b).

5. Ensemble selon l'une quelconque des revendications précédentes, comprenant une pluralité desdits joints à brosse.

6. Ensemble selon l'une quelconque des revendications précédentes, dans lequel ladite face intérieure comporte une pluralité de nervure (119).

7. Ensemble selon la revendication 6, dans lequel lesdites nervures s'étendent sur des distances différentes à partir de ladite face intérieure.

8. Appareil qui extrait de l'énergie à partir de l'expansion d'un fluide de travail gazeux, ledit appareil comprenant un arbre rotatif (111) et un joint d'étanchéité porté par un boîtier (101), ledit joint d'étanchéité comportant un ensemble de segments de garniture rétractables (201) selon l'une quelconque des revendications précédentes agencé dans un anneau centré sur un axe défini par ledit arbre.

9. Appareil selon la revendication 8, dans lequel lesdites extensions configurées en T sont reçues dans une gorge configurée de façon correspondante dans un diaphragme (103) supporté par ledit boîtier (101) et ledit diaphragme est doté d'un trou (307) et / ou lesdits segments sont pourvus de moyens de conduit (401) agencés pour permettre au fluide de travail d'entrer dans ladite gorge afin de forcer les segments vers l'arbre.
